Europäisches Patentamt

European Patent Office

Office européen des brevets

(11) Veröffentlichungsnummer: **0 153 989**
**A2**

## (12) EUROPÄISCHE PATENTANMELDUNG

(21) Anmeldenummer: 84110796.4

(22) Anmeldetag: 11.09.84

(51) Int. Cl.⁴: **G 01 N 23/207**

(30) Priorität: 13.09.83 DE 3332895

(43) Veröffentlichungstag der Anmeldung:
11.09.85 Patentblatt 85/37

(84) Benannte Vertragsstaaten:
DE FR GB NL

(71) Anmelder: NICOLET INSTRUMENT CORPORATION
5225-3 Verona Road
Madison Wisconsin 53711(US)

(72) Erfinder: Boese, Roland, Dr.
Am Kreuz 24
D-4300 Essen 12(DE)

(74) Vertreter: Dipl.-Ing. H. Hauck Dipl.-Phys. W. Schmitz
Dipl.-Ing. E. Graalfs Dipl.-Ing. W. Wehnert Dr.-Ing. W. Döring
Neuer Wall 41
D-2000 Hamburg 36(DE)

(54) Probenhalter für Pulverdiffraktometer.

(57) Zur Beeinflussung der Textur und Korngröße einer Probe und/oder zum Induzieren von Kristallisationsvorgängen in abgekühlten Flüssigkeiten oder Gasen wird die Schwingungsenergie eines Ultraschallgebers auf die Probe übertragen. Dadurch werden mittels Pulverdiffraktometer Identifizierungen erleichtert, quantitative Bestimmungen genauer und Diffraktogramme von Proben, deren Schmelzpunkt oberhalb der Raumtemperatur liegen, ermöglicht.

EP 0 153 989 A2

0153989

## Probenhalter für Pulverdiffraktometer

Die Erfindung betrifft einen Probenhalter für Pulverdiffraktometer zur Beeinflussung der Textur der Probe
oder zum Induzieren eines Kristallisationsvorganges
aus Gläsern, die beim Abkühlen von Flüssigkeiten oder
Gasen entstehen.

Die Beeinflussung der Textur soll eine statistische Verteilung der kristallographischen Orientierung von Kristalliten bewirken, um die Beugungsintensitäten bei
einer quantitativen Bestimmung der Probe oder ihrer
Identifizierung unabhängig von der Textur zu machen.
Beugungslinien von Flüssigkeiten oder Gasen sind für die
Identifizierung und die quantitative Bestimmung kaum
geeignet.

Es ist bekannt, daß zur Verringerung der Textur von
Proben, diese zunächst auf gleichmäßige Korngröße gemörsert werden, um sie anschließend auf den Probenträger
eines Pulverdiffraktometers zu bringen (Martin J. Buerger,
Kristallographie, S. 136, Walter de Gruyter (1977)). Um
die Textureffekte zu verringern, werden die Probenträger
in einer Ebene rotiert (Firmenprospekt "The Nicolet I 2,
Computerized Powder Diffraction for Today's Analytical
Needs", Nicolet Instrument Corporation, 255 Fourier
Avenue, Fremont, Ca 94539, USA, (1983)).

Diffraktogramme von Flüssigkeiten oder Gasen werden zur
quantitativen Bestimmung oder zur Identifizierung von
Proben auf Pulverdiffraktometern nicht eingesetzt, da
die erzeugten Beugungslinien zu breit sind. Tieftemperaturanlagen an Pulverdiffraktometern dienen lediglich
dazu, die thermische Schwingung der Atome zu verringern
oder Phasenübergänge an Feststoffen zu untersuchen. In
diesen Fällen wird ein bereits festes Pulver auf das
Diffraktometer gebracht. Das Einfrieren eines Gases oder
einer Flüssigkeit direkt auf dem Probenträger wird deshalb nicht durchgeführt, weil die Substanz unterhalb
ihres Schmelzpunktes meist entweder zu einem Glas erstarrt oder zu große Kristalle wachsen. Beide Fälle sind
für qualitative und quantitative Bestimmungen ungeeignet.
Somit werden Pulverdiffraktometer meist nur eingesetzt,
um Substanzen zu untersuchen, deren Schmelzpunkte oberhalb der Raumtemperatur liegen. Die Beeinflussung der
Textur durch Mörsern ist zeitraubend und wenig reproduzierbar, die Verringerung eines Textureffektes durch
rotierende Probenträger kann nur in einer Ebene erfolgen.
Zudem verschleißen die mechanisch bewegten Teile.

Der Erfindung liegt die Aufgabe zugrunde, eine statistische Verteilung der Kristallite auf dem Probenträger
eines Pulverdiffraktometers zu erzeugen, reproduzierbar
eine gleichmäßige Korngröße zu erlangen und in glasartig
erstarrten Substanzen eine Kristallisation zu induzieren.
Diese Aufgabe wird erfindungsgemäß dadurch gelöst, daß
am Probenhalter für Pulverdiffraktometer ein Ultraschallgeber angebracht wird, der die Schwingungsenergie auf die
Probe überträgt.

Um die Kristallisation eines Glases zu induzieren wird
gleichzeitig mit geringerer Schwingungsenergie mittels
einer Tieftemperaturanlage die Probe gekühlt.

Die mit der Erfindung erzielbaren Vorteile bestehen insbesondere darin, daß Korngröße und Textur von Proben reproduzierbar beeinflußt werden können, was eine qualitative und quantitative Bestimmung der Probe verbessert.
Das Induzieren eines Kristallisationsvorganges aus Gläsern
oder das Zerkleinern von zu großen Kristallen ermöglicht
es, zusammen mit einer Tieftemperaturanlage, Pulverdiffraktogramme von Proben zu erstellen, die bei Raumtemperatur flüssig oder gasförmig sind. Dies ist auch nahezu
kontinuierlich möglich, indem man durch den Probenträger
ein Gas oder eine Flüssigkeit pumpt und in Takten unter den Schmelzpunkt kühlt, während der Probenträger durch
den Ultraschallgeber in Schwingungen versetzt wird.
Somit ist eine Prozessüberwachung und -steuerung möglich.

In einem Ausführungsbeispiel wird der Probenhalter
schwingfähig gelagert, mit einer Folie abgedeckt und an
einen Ultraschallgeber gekoppelt. Am Ultraschallgeber
wird eine stehende Welle erzeugt, um eine Erwärmung durch
Interferenzen zu vermeiden. Dies geschieht durch das Ausfiltern von störenden Frequenzen, während die Frequenz
der stehenden Welle mittels Mikrophon und Rückkopplung
verstärkt wird.

Patentansprüche

1. Probenhalter für Pulverdiffraktometer dadurch gekennzeichnet, daß mittels Ultraschallgeber die Schwingungsenergie auf die Probe übertragen wird.

2. Probenhalter nach Anspruch 1 dadurch gekennzeichnet, daß mittels Tieftemperaturanlage gleichzeitig mit dem Übertragen der Schwingungsenergie gekühlt werden kann.